# EUROPEAN PATENT APPLICATION

(11) **EP 2 474 598 A1**
(43) Date of publication of application: **11.07.2012**
(21) Application number: 10812043.7
(22) Date of filing: 30.08.2010
(51) Int. Cl.: C10L 1/04, C10G 3/00, C10G 45/62, C10G 45/64

(54) **AVIATION FUEL OIL COMPOSITION**

(30) Priority: 31.08.2009 JP 2009200695
(71) Applicant: JX Nippon Oil & Energy Corporation, Chiyoda-ku Tokyo 100-8162 (JP)
(72) Inventor: KOYAMA Akira, Chiyoda-ku, Tokyo 1008162 (JP)
(74) Representative: Grünecker, Kinkeldey, Stockmair & Schwanhäusser
(86) International application number: PCT/JP2010/064700
(87) International publication number: WO 2011/024997

(57) **Abstract**

To provide an aviation fuel oil composition which has excellent life cycle characteristics and achieves excellent specific fuel consumption. The aviation fuel oil composition according to the present invention includes: a first base which is a fraction having a boiling range of 140 to 280°C obtained through a step of hydrotreating a first feedstock containing a sulfur-containing hydrocarbon compound and an oxygen-containing hydrocarbon compound derived from an animal or vegetable oil and fat or a second feedstock which is an oil blend of the first feedstock and a petroleum-based base obtained by refining a crude oil; and a second base which is a fraction having a boiling range of 140 to 280°C obtained from a heavy oil cracking apparatus.

## Description

### Technical Field

The present invention relates to an aviation fuel oil composition.

### Background Art

Attention is paid to the effective utilization of biomass energy as a preventive measure against global warming. Above all, since biomass energy derived from vegetables can effectively use carbon fixed from carbon dioxide in the atmosphere by photosynthesis during the growth process of vegetables, it has a property which is so-called carbon neutral and may not contribute to the increase in carbon dioxide in the atmosphere from the viewpoint of the life cycle. In addition, from the viewpoint of depletion of petroleum resources and steep rise in crude oil prices, biomass fuel is expected be very promising as an alternative energy to petroleum.

The utilization of such biomass energy has been variously studied even in the field of a transportation fuel. For example, if a fuel derived from an animal or vegetable oil can be used as a diesel fuel, the fuel is expected to play an effective role in the emission reduction of carbon dioxide by the synergistic effect with a high energy efficiency of a diesel engine. As a diesel fuel using an animal or vegetable oil, a fatty acid methyl ester oil (abbreviated as "FAME" from the initial characters of Fatty Acid Methyl Ester) is generally known. FAME is manufactured by subjecting a triglyceride, which is a general structure of animal and vegetable oils, to ester exchange reaction with methanol by the action of an alkali catalyst and the like. The FAME has been studied to be used not only for a diesel fuel but also for an aviation fuel oil, what is called a jet fuel. An airplane is significantly influenced by the recent steep rise in crude oil prices because a huge amount of fuel is used. Under these circumstances, biomass fuel has attracted attention as an important item which assumes the role not only as a preventive measure against global warming but also as an alternative fuel to petroleum. Currently, in a plurality of airline companies, the mixing use of FAME and a petroleum-based jet fuel has been tentatively implemented.

However, as described in the following Patent document 1, in the step of manufacturing FAME, problems have been indicated that a by-product glycerin is required to be treated, or cost and energy are required for the cleaning of a produced oil or the like.

In addition, FAME has points of concern about low-temperature performance or oxidation stability. Especially in an aviation fuel, since the aviation fuel is exposed to an extremely low temperature during flying at a high altitude, highly strict standards for low-temperature performance are established, and in case of using FAME, it is the present situation that the use of mixing with a petroleum-based fuel has to be implemented and the mixing amount has to be a low concentration. Further, regarding the oxidation stability, the addition of an antioxidant is defined as aviation fuel specifications, however, in view of the stability as a base, as with the low-temperature performance, the mixing ratio has to be limited to a low concentration.

On the other hand, attention is paid to the production technique in which animal and vegetable oils and fats are used as raw materials and these raw materials are reacted at high temperature and high pressure in the presence of hydrogen and a catalyst to obtain a hydrocarbon. Since the hydrocarbon obtained by this technique is different from FAME, contains no oxygen or unsaturated bonds and has properties equivalent to those of a petroleum-based hydrocarbon fuel, it can be used at a higher concentration than FAME. However, the hydrocarbon by these techniques generally has a low density, and it was a point of concern that even in case of using for an aviation fuel, the density is reduced when mixed at a high concentration, resulting in degradation of fuel efficiency.

### Citation List

### Patent Literature

[Patent document 1] Japanese Patent Laid-Open No. 2005-154647

### Summary of Invention

### Technical Problem

In light of the above circumstances, it is an object of the present invention to provide an aviation fuel oil composition which has excellent life-cycle characteristics and achieves excellent specific fuel consumption.

### Solution to Problem

In order to solve the above problems, the present invention provides an aviation fuel oil composition comprising a first base which is a fraction having a boiling range of 140 to 280°C obtained through a step of hydrotreating a first feedstock containing a sulfur-containing hydrocarbon compound and an oxygen-containing hydrocarbon compound derived from an animal or vegetable oil and fat or a second feedstock which is an oil blend of the first feedstock and a petroleum-based base obtained by refining a crude oil, and a second base which is a fraction having a boiling range of 140 to 280°C obtained from a heavy oil cracking apparatus.

The second base preferably has a density at 15°C of 800 kg/m³ or more and 840 kg/m³ or less.

In addition, the first base is preferably obtained through a step of hydrotreating the first or second feedstock in the presence of hydrogen under the conditions of a hydrogen pressure of 2 to 13 MPa, a liquid hourly space velocity of 0.1 to 3.0 h⁻¹, a hydrogen/oil ratio of 150 to 1500 NL/L, and a reaction temperature of 150 to 480°C by using a catalyst prepared by supporting one or more metals selected from elements of groups 6A and 8 of the periodic table on a support formed of a porous inorganic oxide composed of two or more elements selected from aluminum, silicon, zirconium, boron, titanium, and magnesium.

Further, the first base is preferably obtained through a step of further isomerizing a hydrogenated oil obtained through the step of hydrotreating the first or second feedstock in the presence of hydrogen under the conditions of a hydrogen pressure of 2 to 13 MPa, a liquid hourly space velocity of 0.1 to 3.0 h⁻¹, a hydrogen/oil ratio of 250 to 1500 NL/L, and a reaction temperature of 150 to 380°C by using a catalyst prepared by supporting a metal selected from elements of group 8 of the periodic table on a support formed of a porous inorganic oxide composed of a substance selected from aluminum, silicon, zirconium, boron, titanium, magnesium, and zeolite.

The aviation fuel oil composition of the present invention may further contain an aviation fuel oil base obtained by refining a crude oil, a synthetic aviation fuel oil base, or a third base which is a mixture thereof.

In addition, the aviation fuel oil composition of the present invention may further contain one or more additives selected from an antioxidant, an antistatic, a metal deactivator, and an anti-icing agent.

Further, the aviation fuel oil composition of the present invention preferably satisfies standard values of JIS K2209 "Aviation Turbine Fuels".

### Advantageous Effects of Invention

The present invention can satisfy both excellent life-cycle characteristics obtained from carbon neutral properties and excellent specific fuel consumption, and provides an environment-friendly aviation fuel oil composition which contributes to primary energy diversification.

### Description of Embodiments

Hereinafter, preferred embodiments of the present invention will be described in detail.

In the present invention, there is used a feedstock (first feedstock) containing a sulfur-containing hydrocarbon compound and an oxygen-containing hydrocarbon compound derived from an animal or vegetable oil and fat or a feedstock (second feedstock) containing the first feedstock and a petroleum-based base obtained by refining a crude oil. In addition, in the following description, the first and the second feedstock are collectively called a "feedstock" depending on the situation.

Examples of animal and vegetable oils and fats include, for example, beef fat, rapeseed oil, camelina oil, soybean oil, palm oil, and oils and fats or hydrocarbons produced by specific microalgae. The specific microalgae mean algae which transform part of nutrients in the body into forms of hydrocarbons or oils and fats. Examples of the specific microalgae include, for example, Chlorella, Scenedesmus, Spirulina, Euglena, Botryococcas braunii and Pseudochoricystis ellipsoidea. It is known that Chlorella, Scenedesmus, Spirulina and Euglena produce oils and fats and Botryococcas braunii and Pseudochoricystis ellipsoidea produce a hydrocarbon. As the animal and vegetable oils and fats in the present invention, any oils and fats may be used and waste oils after using these oils and fats may be used. In addition, there may be used wax esters extracted from microalgae or free fatty acids which are by-products produced by refining oils and fats. That is, the animal and vegetable oils and fats related to the present invention include waste oils of the oils and fats, wax esters extracted from microalgae and free fatty acids which are by-product produced by refining oils and fats. From the viewpoint of carbon neutral, oils and fats derived from vegetables are preferable, and from the viewpoint of the yield of kerosene fraction after hydrotreatment, preferred are oils and fats which have a high composition ratio (fatty acid composition) of each fatty acid group having 10 to 14 carbon atoms in the fatty acid carbon chain. Considering this point of view, the vegetable fats and oils include coconut oil, perm kernel oil and camelina oil, and oils and fats produced by specific microalgae include oils and fats produced by Euglena. In addition, the above oils and fats may be used alone or may be used by mixing two or more kinds.

Further, the fatty acid composition is a value determined by testing a methyl ester, which is prepared according to Standard Methods for the Analysis of Fats, Oils and Related materials (established by Japan Oil Chemists' Society) (1991) "2.4.20.2-91 Preparation Method of fatty Acid Methyl Ester (Boron Trifluoride-Methanl Method)", according to Standard Methods for the Analysis of Fats, Oils and Related Materials (established by Japan Oil Chemists' Society) (1993) "2.4.21.3-77 Fatty Acid Composition (FID Temperature Programmed Gas Chromatograph Method)" using a temperature programmed gas chromatograph equipped with a flame ionization detector (FID), and is referred to as a composition ratio (mass%) of each fatty acid group constituting the oils and fats.

The sulfur-containing hydrocarbon compound incorporated in a feedstock is not particularly limited, but specific examples thereof include sulfide, disulfide, polysulfide, thiol, thiophen, benzothiophene, dibenzothiophene and a derivative thereof. The sulfur-containing hydrocarbon compound contained in a feedstock may be a single compound or may be a mixture of two or more kinds. In addition, a petroleum hydrocarbon fraction containing a sulfur content may be used as the sulfur-containing hydrocarbon compound.

The sulfur content contained in a feedstock is preferably 1 to 50 mass ppm, more preferably 5 to 30 mass ppm and further more preferably 10 to 20 mass ppm in terms of sulfur atom based on the total amount of the feedstock. If the content in terms of sulfur atom is less than 1 mass ppm, it tends to become difficult to stably maintain the deoxygenation activity. On the other hand, if the content in terms of sulfur atom exceeds 50 mass ppm, the sulfur concentration in a light gas discharged in the hydrorefining step is increased and the sulfur content contained in the hydrorefined oil tends to be increased, and in case of using as a fuel for a diesel engine or the like, there is a concern about an adverse effect on an engine exhaust purification apparatus. In addition, the sulfur content in the present invention means the sulfur content by mass determined according to JIS K 2541 "Determination of Sulfur Content" or the method described in ASTM-5453.

The sulfur-containing hydrocarbon compound incorporated in a feedstock is preliminarily mixed with an oxygen-containing hydrocarbon compound derived from an animal or vegetable oil and fat and then the mixture may be introduced into a reactor of a hydrorefining apparatus, or may be supplied at the earlier stage of the reactor when the oxygen-containing hydrocarbon compound derived from an animal or vegetable oil and fat is introduced into the reactor.

In addition, the petroleum-based base, which is obtained by refining a crude oil and contained in the second raw material, includes a faction obtained by the atmospheric or vacuum distillation of a crude oil or a fraction obtained by reactions such as hydrodesulfurization, hydrocracking, fluid catalytic cracking and catalytic reforming of a crude oil. One or two or more of these fractions may be incorporated in a feedstock. Further, the petroleum-based base obtained by refining a crude oil may be a compound derived from chemical products or a synthetic oil obtained through a Fischer-Tropsch reaction.

In the second feedstock, the content ratio of the petroleum-based base obtained by refining a crude oil or the like is not particularly limited, but is preferably 20 to 70 vol% and more preferably 30 to 60 vol%.

The second base related to the present invention is a fraction having a boiling range of 140 to 280°C obtained through a step of hydrotreating a feedstock (the first or second feedstock).

The hydrotreatment preferably includes the following hydrotreatment step. The hydrotreatment step related to the present invention is preferably carried out under the conditions of a hydrogen pressure of 2 to 13 MPa, a liquid hourly space velocity of 0.1 to 3.0 h⁻¹, and a hydrogen/oil ratio of 150 to 1500 NL/L, more preferably a hydrogen pressure of 2 to 13 MPa, a liquid hourly space velocity of 0.1 1 to 3.0 h⁻¹, and a hydrogen/oil ratio of 150 to 1500 NL/L, and further more preferably a hydrogen pressure of 3 to 10.5 MPa, a liquid hourly space velocity of 0.25 to 1.0 h⁻¹, and a hydrogen/oil ratio of 300 to 1000 NL/L. Each of these conditions is a factor having an influence on the reaction activity, for example, if the hydrogen pressure and the hydrogen/oil ratio are less than the lower limits, the reactivity tends to reduce or the activity tends to reduce rapidly, and if the hydrogen pressure and the hydrogen/oil ratio exceed the upper limits, an enormous equipment investment for a compressor or the like may be required. Lower liquid hourly space velocity tends to be more advantageous for the reactions. However, if the liquid hourly space velocity is less than the lower limits, an extremely large reaction tower volume is required and an enormous equipment investment tends to be required. On the other hand, if the liquid hourly space velocity exceeds the upper limits, the reaction may not tend to proceed sufficiently.

The reaction temperature can be arbitrarily set in order to obtain the intended cracking rate of the feedstock heavy fraction or the intended fraction yield. The average temperature of the whole reactor is generally in the range of 150 to 480°C, preferably 200 to 400°C and more preferably 260 to 360°C. If the reaction temperature is less than 150°C, the reaction would not proceed sufficiently, and if the reaction temperature exceeds 480°C, cracking excessively proceeds and the liquid product yield tends to be decreased.

As the hydrotreating catalyst, there may be used a catalyst in which a metal selected from elements of groups 6A and 8 of the periodic table is supported on a support formed of a porous inorganic oxide composed of two or more elements selected from aluminum, silicon, zirconium, boron, titanium, and magnesium.

As the support for the hydrotreating catalyst, there is used a porous inorganic oxide comprised of two or more elements selected from aluminum, silicon, zirconium, boron, titanium and magnesium. The support is generally a porous inorganic oxide containing aluminum, and the other constituent components of the support include silica, zirconia, boria, titania and magnesia. Preferred is a composite oxide containing alumina and at least one or more selected from the other constituent components. In addition, as a component other than these, phosphorus may be contained. The total content of the components other than alumina is preferably 1 to 20 wt% and more preferably 2 to 15 wt%. If the total content of the components other than alumina is less than 1 wt%, a sufficient catalyst surface area cannot be obtained and the activity may be reduced. On the other hand, the total content exceeds 20 wt%, the acidity of the support is increased and the activity may be reduced by the formation of coke. When phosphorus is contained as a support constituent component, the content is preferably 1 to 5 wt% and more preferably 2 to 3.5 wt% in terms of the oxide.

There is no particular restriction on a raw material which is a precursor of silica, zirconia, boria, titania and magnesia which are support constituent components other than alumina, and a general solution containing silicon, zirconium, boron, titanium or magnesium may be used. For example, for silicon, silica acid, water glass, and a silica sol may be used. For titanium, titanium sulfate, titanium tetrachloride and various lakeside salts thereof may be used. For zirconium, zirconium sulfate and various alkoxide salts thereof may be used. For boron, boric acid may be used. For magnesium, magnesium nitrate may be used. For phosphorus, phosphoric acid and alkali metal salts thereof may be used.

Preferred is a method in which the raw materials of the support constituent components other than alumina are added at any stage prior to calcination of the support. For example, the raw materials is preliminarily added to an aluminum aqueous solution and then an aluminum hydroxide gel containing these constituent components may be prepared, or the raw materials may be added to the aluminum hydroxide gel prepared. Alternatively, the raw materials may be added in a step in which water or an acid aqueous solution is added to a commercially available alumina intermediate or boehmite powder and the resulting mixture is kneaded, but more preferred is a method in which the raw materials are allowed to coexist at the step of preparing an aluminum hydroxide gel. Although the mechanism exhibiting advantageous effects of these support constituent components other than alumina has not been elucidated, it is assumed that these components form a composite oxide state together with aluminum. It is thus presumed that this increases the surface area of the support and causes some interaction with the active metals, thereby giving influences to the activity of the catalyst.

The active metals of the hydrotreating catalyst include at least one metal selected from metals of groups 6A and 8 of the periodic table and preferably include two or more metals selected from groups 6A and 8 of the periodic table. Examples of these metals include, for example, Co-Mo, Ni-Mo, Ni-Co-Mo and Ni-W. In carrying out the hydrotreatment, these metals are used after converting to a sulfide state.

As the content of the active metals, for example, the total amount supported of W and Mo is preferably 12 to 35 wt% and more preferably 15 to 30 wt% in terms of the oxide, based on the catalyst weight. If the total amount supported of W and Mo is less than 12 wt%, the catalytic activity would be reduced because the number of active sites is reduced. If the total amount supported exceeds 35 wt%, the metals fail to disperse effectively, possibly leading to a reduction in catalytic activity. In addition, the total amount supported of Co and Ni is preferably 1.5 to 10 wt% and more preferably 2 to 8 wt%, in terms of the oxide, based on the catalyst weight. If the total amount supported of Co and Ni is less than 1.5 wt%, a sufficient cocatalytic effect cannot be obtained, possibly leading to a reduction in catalytic activity. If the total amount supported is more than 10 wt%, the metals fail to disperse effectively, possibly leading to a reduction in catalytic activity.

In any of the hydrotreating catalysts, there is no particular restriction on the method of supporting the active metals on a support, and any conventional method for producing a usual desulfurization catalyst may be employed. A method is preferably employed in which a catalyst support is impregnated with a solution containing salts of the active metals. Alternatively, an equilibrium adsorption method, a pore-filling method, or an incipient-wetness method is also preferably used. For example, the pore-filling method is a method in which the pore volume of a support is measured in advance and then the support is impregnated with the same volume of a metal salt solution as the pore volume. There is no particular restriction on the method of impregnating the support with a solution. Therefore, any suitable method may be used depending on the amount of the metals to be supported and physical properties of the support.

The type of the hydrotreatment reactor may be a fixed-bed system. That is, hydrogen may be supplied in counterflow or parallel flow with respect to the feedstock. When a plurality of reactors are provided, counterflow and parallel flow may be combined. The supply system of the feedstock is generally downflow and a gas-liquid concurrent flow system may be employed. Further, the reactors may be used alone or in combination with a plurality of them, and there may be employed a structure in which the inside of the reactor is divided into a plurality of catalyst beds. In the present invention, the hydrotreated oil hydrotreated in the reactor is fractionated into predetermined fractions through gas-liquid separation and rectification. At this time, in order to remove by-product gases such as water, carbon monoxide, carbon dioxide and hydrogen sulfide which are generated accompanied by the reaction, a gas-liquid separation apparatus or other by-product gas removal apparatus may be installed between the plurality of reactors or in the product recovering step. Preferable examples of an apparatus to remove a by-product include a high-pressure separator.

Hydrogen gas is generally introduced from the inlet of the first reactor, accompanied by the feedstock before or after passing through a heating furnace. Alternatively, hydrogen gas may be introduced into between the catalyst beds or between the plurality of reactors for the purposes of controlling the temperature in the reactors and maintaining the hydrogen pressure over the whole reactors as widely as possible. Hydrogen to be introduced in such a manner is referred to as quench hydrogen. The ratio of the quenching hydrogen to the hydrogen introduced accompanied by the feedstock is preferably from 10 to 60 vol% and more preferably from 15 to 50 vol%. The ratio of less than 10 vol% would cause a tendency that the reaction at reaction sites in the subsequent stages may not proceed sufficiently. The ratio of more than 60 vol% would cause a tendency that the reaction near the inlet of the reactor may not proceed sufficiently.

In the method of producing the aviation fuel oil base of the present invention, in order to suppress the heat generation amount in the hydrotreatment reactor in hydrotreating the feedstock, a specific amount of a recycled oil may be incorporated into the feedstock. The content of the recycled oil is preferably 0.5- to 5-fold by mass based on the oxygen-containing hydrocarbon compound derived from an animal or vegetable oil and fat, and the ratio can be optionally determined within the above range depending on the maximum use temperature of the hydrotretment reactor. For this reason, if it is assumed that both oils have the same specific heat, the reaction heat may be sufficiently reduced if the content of both oils is within the above range, because if both oils are mixed at a ratio of 1 to 1, the temperature increase becomes half that of the case where a substance derived from an animal or vegetable oil and fat is reacted singly. In addition, if the content of the recycled oil is higher than 5-fold by mass of the oxygen-containing hydrocarbon compound, the concentration of the oxygen-containing hydrocarbon compound is reduced and thus the reactivity is reduced, and in addition, the flow rate of pipes and the like is increased and thus the load is increased. On the other hand, if the content of the recycled oil is lower than 0.5-fold by mass of the oxygen-containing hydrocarbon compound, the temperature increase may not be sufficiently suppressed.

The method of mixing of the feedstock and the recycled oil is not particularly limited, but for example, both oils are mixed in advance and the mixture may be introduced into a reactor of a hydrotreatment apparatus, or when a feedstock is introduced into the reactor, the feedstock may be supplied at the previous stage of the reactor. Further, it is possible that a plurality of reactors are connected in series and then the feedstock is introduced between the reactors, or the catalyst layer is divided in a single reactor and then the feedstock is introduced between the catalyst layers.

In addition, the recycled oil preferably contains a part of a hydrotreated oil obtained by removing by-product gases such as water, carbon monoxide, carbon dioxide and hydrogen sulfide which are generated after hydrotreating the feedstock. In addition, the recycled oil preferably contains a part of products obtained by isomerizing each of a light fraction, an intermediate fraction and a heavy fraction which are fractionated from the feedstock, or preferably contains a part of an intermediate fraction which is fractionated from a product obtained by further isomerizing the hydrotreated oil.

In the hydrotreatment of the present invention, there is preferably included a step of further isomerizing the hydrotreated oil obtained by the above hydrotreating step.

The sulfur content contained in the hydrotreated oil which is an isomerized feedstock is preferably 1 mass ppm or less and more preferably 0.5 ppm. If the sulfur content exceeds 1 mass ppm, the isomerization tends to be prevented. In addition to this, for the same reason, the reaction gas containing hydrogen, which is introduced together with the hydrogenated oil, is required to have a sufficiently low sulfur concentration, and has a sulfur concentration of preferably 1 ppm by volume or less and more preferably 0.5 ppm by volume or less.

The isomerization step is carried out under the conditions of a hydrogen pressure of 2 to 13 MPa, a liquid hourly space velocity of desirably 0.1 to 3.0 h^{-l}, and a hydrogen/oil ratio of 250 to 1500 NL/L, more desirably a hydrogen pressure of 2.5 to 10 MPa, a liquid hourly space velocity of 0.5 to 2.0 h⁻¹, and a hydrogen/oil ratio of 380 to 1200 NL/L, and further desirably a hydrogen pressure of 3 to 8 MPa, a liquid hourly space velocity of 0.8 to 1.8 h⁻¹, and a hydrogen/oil ratio of 350 to 1000 NL/L, in the presence of hydrogen. Each of these conditions is a factor having an influence on the reaction activity, for example, if the hydrogen pressure and the hydrogen/oil ratio are less than the lower limits, the reactivity tends to reduce or the activity tends to reduce rapidly, and if the hydrogen pressure and the hydrogen/oil ratio exceed the upper limits, an enormous equipment investment for a compressor or the like may be required. Lower liquid hourly space velocity tends to be more advantageous for the reactions. However, if the liquid hourly space velocity is less than the lower limits, an extremely large reaction tower volume is required and an enormous equipment investment tends to be required. On the other hand, if the liquid hourly space velocity exceeds the upper limits, the reaction does not tend to sufficiently proceed.

The reaction temperature in the isomerization step can be arbitrarily set in order to obtain the intended cracking rate of the feedstock heavy fraction or the intended fraction yield, but is in the range of preferably 150 to 380°C, more preferably 240 to 380°C and especially preferably 250 to 365°C. If the reaction temperature is lower than 150°C, the hydroisomerization reaction would not proceed sufficiently, and if the reaction temperature exceeds 380°C, excessive cracking or other side reactions proceed, possibly leading to a reduction in the liquid product yield.

As a catalyst for isomerization, there may be used a catalyst prepared by supporting one or more metals selected from elements of group 8 of the periodic table on a support formed of a porous inorganic oxide composed of substances selected from aluminum, silicon, zirconium, boron, titanium, magnesium, and zeolite.
Examples of the porous inorganic oxide used as a support of the isomerization catalyst include alumina, titania, zirconia, boria, silica or zeolite, and in the present invention, of these, preferred is one composed of alumina and at least one of titania, zirconia, boria, silica and zeolite. The production method is not particularly limited, but an optional preparation method may be employed by using raw materials in the form of various sols corresponding to each element or a salt compound. Furthermore, the support may be prepared by once preparing a composite hydroxide or a composite oxide such as silica-alumina, silica-zirconia, alumina-titania, silica-titania and alumina-boria and then adding the composite hydroxide or composite oxide in form of an alumina gel or other hydroxides, or in the forms an appropriate solution, at a given step of the preparation step. The proportion of alumina to the other oxides may be at any ratio based on the support, but the content of alumina is preferably 90 mass% or less, more preferably 60 mass% or less, further more preferably 40 mass% or less, and preferably 10 mass% or more, more preferably 20 mass% or more.

Zeolite is a crystalline alumino silicate. Examples of the crystalline alumino silicate include faujasite, pentasil and mordenite. There may be used ones ultrastabilized by a specific hydrothermal treatment and/or acid treatment, or zeolites whose alumina content is adjusted. Preferred zeolites are those of faujasite and mordenite types, and particularly preferred zeolites are those of Y and beta types. The zeolites of Y type are preferably ultrastabilized. The zeolite ultrastabilized by a hydrothermal treatment have an intrinsic micro porous structure, so-called micro pores of 20 Å or less as well as newly formed pores in the range of 20 to 100 Å. The hydrothermal treatment may be carried out under known conditions.

As the active metal of the isomerization catalyst, there are used one or more metals selected from elements of group 8 of the periodic table. Among these metals, preferably used are one or more metals selected from Pd, Pt, Rh, Ir, Au and Ni, and more preferably used is a combination thereof. Examples of the preferred combination include, for example, Pd-Pt, Pd-Ir, Pd-Rh, Pd-Au, Pd-Ni, Pt-Rh, Pt-Ir, Pt-Au, Pt-Ni, Rh-Ir, Rh-Au, Rh-Ni, Ir-Au, Ir-Ni, Au-Ni, Pd-Pt-Rh, Pd-Pt-Ir and Pt-Pd-Ni. Among these, more preferred combinations are Pd-Pt, Pd-Ni, Pt-Ni, Pd-Ir, Pt-Rh, Pt-Ir, Rh-Ir, Pd-Pt-Rh, Pd-Pt-Ni and Pd-Pt-Ir, and especially preferred combinations are Pd-Pt, Pd-Ni, Pt-Ni, Pd-Ir, Pt-Ir, Pd-Pt-Ni and Pd-Pt-Ir.

The total content of the active metals is preferably 0.1 to 2 mass%, more preferably 0.2 to 1.5 mass% and further more preferably 0.5 to 1.3 mass%, in terms of metal, on the basis of the catalyst mass. If the total amount supported of metals is less than 0.1 mass%, the number of active sites is reduced, leading to a tendency that a sufficient activity may not be obtained. On the other hand, if the total amount supported of metals exceeds 2 mass%, the metals fail to disperse effectively, leading to a tendency that a sufficient activity may not be obtained.

In any of the isomerization catalysts, there is no particular restriction on the method of supporting the active metals on a support, and any conventional method for producing a usual desulfurization catalyst may be employed. There is preferably employed a method in which a catalyst support is impregnated with a solution containing salts of the active metals. Alternatively, there is also preferably employed an equilibrium adsorption method, a pore-filling method, or an incipient-wetness method. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

The isomerization catalyst used in the present invention is preferably used for the reaction after the active metals contained in the catalyst are subjected to reduction treatment. The reduction conditions are not particularly limited, but the active metals are reduced at a temperature of 200 to 400°C, preferably 240 to 380°C under a hydrogen stream. If the reduction temperature is less than 200°C, the active metals are not reduced sufficiently and thus the catalyst may not exert hydrodeoxidization and hydroisomerization activities. If the reduction temperature exceeds 400°C, agglomeration of the active metals proceeds and thus similarly the catalyst may not exert hydrodeoxidization and hydroisomerization activities.

The type of the isomerization reactor may be a fixed-bed system. That is, hydrogen may be supplied in counterflow or parallel flow with respect to the feedstock. When a plurality of reactors are provided, counterflow and parallel flow may be combined. The supply system of the feedstock is generally downflow and a gas-liquid concurrent flow system may be employed. Further, the reactors may be used alone or in combination with a plurality of them, and there may be employed a structure in which the inside of the reactor is divided into a plurality of catalyst beds.

Hydrogen gas is generally introduced from the inlet of the first reactor, accompanied by the feedstock before or after passing through a heating furnace. Alternatively, hydrogen gas may be introduced into between the catalyst beds or between the plurality of reactors for the purposes of controlling the temperature in the reactors and maintaining the hydrogen pressure over the whole reactors. Hydrogen to be introduced in such a manner is referred to as quench hydrogen. The ratio of the quenching hydrogen to the hydrogen introduced, accompanying by the feedstock is preferably from 10 to 60 vol% and more preferably from 15 to 50 vol%. The ratio of less than 10 vol% would cause a tendency that the reaction at reaction sites in the subsequent stages may not proceed sufficiently. The ratio of more than 60 vol% would cause a tendency that the reaction near the inlet of the reactor may not proceed sufficiently.

The isomerized oil obtained after the isomerization step may be fractionated into a plurality of fractions in a rectification column, where necessary. For example, the isomerized oil may be fractionated into a light fraction such as a gas and a naphtha fraction, an intermediate fraction such as kerosene and a gas oil fraction, and a heavy fraction such as a residue fraction. In this case, the cut temperature between the light fraction and the intermediate fraction is preferably 100 to 200°C, more preferably 120 to 180°C and further more preferably 120 to 160°C and still further more preferably 130 to 150°C. The cut temperature between the intermediate fraction and the heavy fraction is preferably 250 to 360°C, more preferably 250 to 320°C, further more preferably 250 to 300°C and still further more preferably 250 to 280°C. Hydrogen may be produced by modifying a part of the light hydrocarbon fraction to be produced in a steam reforming apparatus. The hydrogen thus produced has a property which is so-called carbon neutral and can reduce the environmental load because the raw materials used for steam reforming are hydrocarbons derived from biomass. In addition, the intermediate fraction obtained by fractionating the isomerized oil can be suitably used as an aviation fuel oil base.

Further, the second base contained in the aviation fuel oil composition of the present invention is a fraction having a boiling range of 140 to 280°C which is obtained from the heavy oil cracking apparatus. As the heavy oil cracking apparatus, there may used common apparatuses such as a fluid catalytic cracking apparatus using an atmospheric residue from an atmospheric distillation apparatus or a vacuum residue from a vacuum distillation apparatus as a raw material, a hydrocracking apparatus using a vacuum residue from a vacuum distillation apparatus as a raw material or a thermal cracking apparatus, and an aviation fuel fraction produced by these apparatuses has a density at 15°C of preferably 800 kg/m³ or more and 840 kg/m³ or less, more preferably 810 kg/m³ or more and 840 kg/m³ or less and further preferably 820 kg/m³ or more and 840 kg/m³ or less. If the aviation fuel fraction has a density of less than 800 kg/m³, it is not preferable because the aviation fuel fraction has no effect for preventing the reduction in density in case of mixing with the hydrotreated oil of the animal or vegetable oil and fat. In addition, if the aviation fuel fraction has a density exceeding 840 kg/m³, it is also not preferable because the combustibility is reduced due to the increase in the aromatic content. Further, in JIS K2209 "Aviation Turbine Fuels", 0.8398 kg/cm³ (839.8 kg/m³) is defined as the upper limit of the density specification.

The aviation fuel oil base related to the present invention may contain only the first base and second base, but may further contain, as a third base, an aviation fuel oil base obtained by refining a crude oil, a synthetic aviation fuel oil base, or a mixture thereof. The third base includes a synthetic aviation fuel oil base obtained through a Fischer-Tropsch reaction by using an aviation fuel oil fraction obtained by a general petroleum refining step and a synthetic gas composed of hydrogen and carbon monoxide as raw materials. The synthetic aviation fuel oil base is **characterized in that** it contains almost no aromatic content, is mainly composed of a saturated hydrocarbon, and has a high smoke point. In addition, the production method of the synthetic gas is not particularly limited and a well-known method may be employed.

Further, the aviation fuel oil composition of the present invention may further contain various additives added to a conventional aviation fuel oil. As the additives, preferred are one or more additives selected from an antioxidant, an antistatic, a metal deactivator, and an anti-icing agent.

As the antioxidant, in order to prevent the generation of gum in the aviation fuel oil, there may be added a mixture of 75% or more of N,N-diisopropylparaphenylene diamine and 2,6-di-tertiary-butylphenol and 25% or less of tertiary and tritertiary butylphenol, a mixture of 72% or more of 2,4-dimethyl-6-tertiary-butylphenol and 28% or less of monomethyl and dimetyl tertiary butylphenol, a mixture of 55% or more of 2,4-dimethyl-6-tertiary-butylphenol and 45% or less of tertiary and ditertiary butylphenol, 2,6-ditertiarybutyl-4-methylphenol, and the like, as long as not exceeding 24.0 mg/l.

As the antistatic, in order to prevent the accumulation of static electricity caused by the friction with the inside wall of the pipe when the aviation fuel oil flows inside the fuel piping system at a high speed and to increase electrical conductivity, STADIS 450 produced by Octel or the like may be added, as long as not exceeding 3.0 mg/l.

As the metal deactivator, in order to prevent that the free metal components contained in the aviation fuel oil are reacted to make the fuel unstable, N,N-disalicylidene-1,2-propanediamine or the like may be added, as long as not exceeding 5.7 mg/l.

As the anti-icing agent, in order to prevent that a small amount of water contained in the aviation fuel oil is frozen to block the pipe, there may be added ethylene glycol monoethyl ether or the like in the range of 0.1 to 0.15 vol%.

As the aviation fuel oil composition of the present invention, there may be further arbitrarily added an optional additive such as antistatic, a corrosion inhibition agent and a bactericidal agent without departing from the scope of the present invention.

The aviation fuel oil composition of the present invention preferably satisfies the standard values of JIS K2209 "Aviation Turbine Fuels".

From the viewpoint of the specific fuel consumption, the aviation fuel oil composition of the present invention has a density at 15°C of preferably 775 kg/m³ or more and more preferably 780 kg/m³ or more. On the other hand, from the viewpoint of the combustibility, the aviation fuel oil composition has a density at 15°C of preferably 839 kg/m³ or less, more probably 830 kg/m³ or less and further more preferably 820 kg/m³ or less. In addition, the density at 15°C referred herein denotes a value measured according to JIS K2249 "Crude Oil and Petroleum Products -Determination of density and petroleum measurement tables based on reference temperature(15°C)".

From the viewpoint of the evaporation characteristics, as the distillation properties of the aviation fuel oil composition of the present invention, a 10 vol% distillation temperature is preferably 204°C or less and more preferably 200°C or less. From the viewpoint of the burning characteristics (burning out characteristics), the end point is preferably 300°C or less and more preferably 290°C or less and further more preferably 280°C or less. In addition, the distillation properties referred herein denotes a value measured according to JIS K2254 Petroleum Products -Determination of distillation characteristics".

From the viewpoint of the prevention of defects caused by precipitate formation in the fuel introduction system, the existent gum content of the aviation fuel oil composition of the present invention is preferably 7 mg/100 ml or less, more preferably 5 mg/100 ml or less and further more preferably 3 mg/100 ml or less.
In addition, the existent gum content referred herein denotes a value measured according to JIS K2261 "Motor gasoline and aviation fuels - Determination of existent gum".

From the viewpoint of the specific fuel consumption, the net heat of combustion of the aviation fuel oil composition of the present invention is 42.8 MJ/kg or more and more preferably 45 MJ/kg or more. In addition, the net heating value used herein denotes a value measured according to JIS K2279 "Crude Oil and petroleum products - Determination of heat of combustion".

From the viewpoint of achieving the flowability of the fuel pipe and the uniform fuel injection, the kinematic viscosity at -20°C of the aviation fuel oil composition of the present invention is preferably 8 mm²/s or less, more preferably 7 mm²/s or less and further more preferably 5 mm²/s or less. In addition, the kinematic viscosity referred herein denotes a value measured according to JIS K2283 "Crude petroleum and petroleum products - Determination of kinematic viscosity".

From the viewpoint of the corrosive properties of the fuel tank and pipe, the copper strip corrosion of the aviation fuel oil composition of the present invention is preferably 1 or less. The copper strip corrosion referred herein denotes a value measured according to JIS K2513 "Petroleum Products - Corrosiveness to copper-Copper strip test".

From the view point of the combustibility (prevention of soot generation), the aromatic content of the aviation fuel oil composition of the present invention is preferably 25 vol% and more preferably 20 vol%. The aromatic content referred herein denotes a value measured according to JIS K2536 "Liquid petroleum products - Testing method of components (Fluorescent Indicator Adsorption Method)".

From the view point of the combustibility (prevention of soot generation), the smoke point of the aviation fuel oil composition of the present invention is preferably 25 mm or more, more preferably 27 mm or more and further more preferably 30 mm or more. In addition, the smoke point referred herein denotes a value measured according to JIS K2537 "Petroleum products- Kerosine and aviation turbine fuels - Determination of smoke point".

From the viewpoint of the corrosiveness, the sulfur content of the aviation fuel oil composition of the present invention is preferably 0.3 mass% or less, more preferably 0.2 mass% or less and further more preferably 0.1 mass% or less. In addition, from the viewpoint of the corrosiveness, the mercaptan sulfur content is preferably 0.003 mass% or less, more preferably 0.002 mass% or less and further more preferably 0.001 mass% or less. Further, the sulfur content referred herein is a value measured according to JIS K2541 "Crude Oil and Petroleum Products - Determination of sulfur content", and the mercaptan sulfur content referred herein is a value measured according to JIS K2276 "Determination of mercaptan sulfur in light and middle distillates fuels (Potentiometric Method)".

From the viewpoint of the safety, the flash point of the aviation fuel oil composition of the present invention is preferably 38°C or more, more preferably 40°C or more and further more preferably 45°C or more. The flash point referred herein denotes a value measured according to JIS K2265 "Crude Oil and Petroleum Products - Determination of flash point - Tag Closed Cup Method ".

From the viewpoint of the corrosiveness, the total acid value of the aviation fuel oil composition of the present invention is preferably 0.1 mg KOH/g or less, more preferably 0.08 mg KOH/g or less and further more preferably 0.05 mg KOH/g or less. In addition, the total acid value referred herein denotes a value measured according to JIS K2276 "Petroleum Products - Aviation Fuels Test Method - Determination of the Total Acid Value ".

From the viewpoint of the prevention of the fuel supply reduction due to the fuel freezing under the exposure to a low temperature during flying, the freezing point of the aviation fuel oil composition of the present invention is preferably -47°C or less, more preferably -48°C or less and further more preferable -50°C or less. In addition, the freezing point referred herein denotes a value measured according to JIS K 2276 "Determination of the freezing point of aviation fuels".

From the viewpoint of the prevention of fuel filter blockage due to the precipitate formation during exposure to a high temperature, the thermal stability of the aviation fuel oil composition of the present invention is preferably that the filter pressure drop is 10.1 kPa or less and the preheat tube deposit rating is less than 3 in Method A, and the filter pressure drop e is 3.3 kPa or less and the preheat tube deposit rating is less than 3 in Method B. In addition, the thermal stability referred herein denotes a value measured according to JIS K2276 "Determination of thermal oxidation stability of gas turbine fuels - JETOT method Method A, Method B".

In order to prevent trouble due to the precipitation of a dissolution water during exposure to a low temperature, the water solubility of the aviation fuel oil composition of the present invention is preferably that the separation state is 2 or less and the interface state is 1 b or less. In addition, the water solubility referred herein denotes a value measured according to JIS K2276 "Determination of the water reaction of aviation fules".

The aviation fuel oil base and aviation fuel oil composition of the present invention, which contains an environment-friendly base produced using an animal or vegetable oil and fat as a raw material, are excellent in all of the combustibility, oxidation stability and life cycle CO₂ emission characteristics.

### Examples

Hereinafter, the present invention will be described more specifically based on Examples, but the present invention is not limited by these examples.

### (Preparation of Catalyst)

### <Catalyst A>

A mixture was obtained by adding 18.0 g of sodium silicate solution No. 3 to 3000 g of a sodium aluminate aqueous solution having a concentration of 5 mass%, and the mixture was placed in a vessel kept at a temperature of 65°C. On the other hand, in a separate vessel kept at a temperature of 65°C, a solution was prepared by adding 6.0 g of phosphoric acid (concentration: 85%) to 3000 g of an aluminum sulfate aqueous solution having a concentration of 2,5 mass%, and to the resulting solution was added dropwise the solution containing sodium aluminate. The addition of the solution was stopped when the mixture solution reached pH 7.0. The resulting slurry product was filtered off to obtain a slurry in a cake form.
The slurry in a cake form was transferred into a vessel equipped with a reflux condenser, and to the vessel were added 150 ml of distilled water and 10 g of a 27% ammonia aqueous solution, followed by heating and stirring at 75°C for 20 hours. The slurry was placed in a kneading apparatus and kneaded while heating at 80°C or higher to remove moisture, thereby obtaining a clay-like kneaded product. The resulting kneaded product was extruded by an extruder into a cylindrical shape having a diameter of 1.5 mm, followed by drying at 110°C for one hour and then calcining at 550°C to obtain a extruded support.
Into an eggplant-type flask were placed 50 g of the resulting extruded support, followed by pouring an impregnation solution containing 17.3 g of molybdenum trioxide, 13.2 g of nickel (II) nitrate hexahydrate, 3.9 g of phosphoric acid (concentration: 85%) and 4.0 g of malic acid while deaerating with a rotary evaporator. The impregnated sample was dried at 120°C for one hour and then calcined at 550°C to obtain a catalyst A. The physical properties of the catalyst A are shown in Table 1.

### <Catalyst B>

Into an eggplant-type flask was placed 50 g of a silica-alumina support having a silica/alumina ratio (mass ratio) of 70:30, followed by pouring an aqueous solution of tetraamnineplatinum (II) chloride while deaerating with a rotary evaporator. The impregnated sample was dried at 110°C and then calcined at 350°C to obtain a catalyst B. In the catalyst B, the amount supported of platinum was 0.5 mass% based on the total amount of the catalyst. The physical properties of the catalyst B are shown in Table 1.

### (Example 1)

A feedstock A was prepared by adding dimethylsulfide to a vegetable fat and oil 1 so that the sulfur content (in terms of sulfur atom) is 10 mass ppm. The feedstock A was hydrotreated using the catalyst A shown in Table 1 under the condition a shown in Table 3. The hydrotreated oil was isomerized using the catalyst B shown in Table 1 under the condition b shown in Table 3. A fraction having a boiling range of 140 to 280°C obtained from the isomerized oil after isomerization was used as a base 1. The properties of the base 1 are shown in Table 4. An aviation fuel oil composition 1 was prepared by mixing the base 1 with 30 vol% of a catalytic cracking kerosene having the properties shown in Table 2 obtained from a fluid catalytic cracking apparatus.

### (Example 2)

A feedstock B was prepared by adding dimethylsulfide to a vegetable fat and oil 2 having the properties shown in Table 2 so that the sulfur content (in terms of sulfur atom) is 10 mass ppm. The feedstock B was hydrotreated using the catalyst A shown in Table 1 under the condition c shown in Table 3. A fraction having a boiling range of 140 to 280°C obtained from the hydrotreated oil was isomerized using the catalyst B shown in Table 1 under the condition b shown in Table 3. The isomerizing oil after isomerization was cut by distillation into a fraction having a boiling range of 140 to 280°C to obtain a base 2. The properties of the base 2 are shown in Table 4. An aviation fuel oil composition 2 was prepared by mixing the base 2 with 30 vol% of a hydrocracked kerosene having the properties shown in Table 2 obtained from a heavy oil hydrocracking apparatus.

### (Example 3)

An aviation fuel oil composition 3 was prepared by mixing the aviation fuel oil composition 2 described in Example 2 with 30 vol% of a petroleum-based aviation fuel oil base having the properties shown in Table 2 obtained by refining a crude oil.

### (Comparative Example 1)

Table 4 shows the properties of a fatty acid alkyl ester obtained by esterifying the vegetable oil and fat 1 having the properties shown in Table 2. These fatty acid alkyl esters are methyl ester compounds obtained by the reaction with methanol, and here, an ester exchange reaction was employed in which the oil and fat was directly reacted with an alkyl alcohol by stirring for approximately one hour at 70°C in the presence of an alkali catalyst (sodium methylate) to obtain an ester compound. An aviation fuel oil composition 4 was prepared by mixing the fatty acid methyl ester compounds with 30 vol% of the catalytic cracking kerosene described in Example 1.

### (Comparative Example 2)

An aviation fuel oil composition 5 was prepared by mixing 70 vol% of the base 1 described in Example 1 and 30 vol% of a petroleum-based aviation fuel oil base having the properties shown in Table 2 obtained by refining a crude oil.

### (Comparative Example 3)

A conventional representative commercially available petroleum-based aviation fuel oil base was prepared as an aviation fuel oil of Example 3.

In addition, in any of Examples 1 to 3 and Comparative Examples 1 and 2, the following additives were added.
Antioxidant (2,6-ditertiary-butyl-phenol) 20 mass ppm (based on the total amount of the fuel composition)
Antistatic (STADIS 450) 2.0 mg/L (based on the total amount of the fuel composition)

### (General Properties of Feedstock, Aviation Fuel oil Base, and Aviation Fuel Oil)

The general properties of the feedstock, aviation fuel oil base and aviation fuel oil shown in Tables 2, 4 and 5 are values measured by the following methods.
The density at 15°C (density @15°C) means a value measured according to JIS K2249 "Crude Oil and Petroleum Products - Determination of density and petroleum measurement tables based on reference temperature(15°C)"
The kinematic viscosity at 30°C means a value measured according to JIS K2283 "Crude petroleum and petroleum products - Determination of kinematic viscosity".
Elemental analysis C (mass%) and P (mass%) means a value measured according to ASTM D 5291 "Standard Test Methods for Instrumental Determination of Carbon, Hydrogen and Nitrogen in Petroleum Products and Lubricants".
The oxygen content means a value measured according to UOP649-74 "Total Oxygen in Organic Materials by Pyrolysis-Gas Chromatographic Technique" or the like.
The sulfur content means a value measured according to JIS K2541 "Crude Oil and Petroleum Products - Determination of sulfur content"
The acid value means a value measured according to JIS K2501 1 "Petroleum products and lublicants - Determination of neutralization nunber".
The composition ratio of fatty acid groups in oil and fat means a value determined according to the above-described Standard Methods for the Analysis of Fats, Oils and Related Materials (established by Japan Oil Chemists' Society) (1993) "2.4.21.3-77 Fatty Acid Composition (FID Temperature Programmed Gas Chromatograph Method)".
The flash point means a value determined according to JIS K2265 "Crude Oil and Petroleum Products - Determination of flash point - Tag Closed Cup Method".
The distillation property is a value measured according to JIS K2254 Petroleum Products -Determination of distillation characteristics".
The aromatic content means a value measured according to JIS K2536 "Liquid petroleum products - Testing method of components (Fluorescent Indicator Adsorption Method)".
The total acid value is a value measured according to JIS 2276 "Petroleum Products - Aviation Fuels Test Method - Determination of the Total Acid Value "
The freezing point means a value measured according to JIS 2276 "Petroleum Products - Aviation Fuels Test Method - Determination of the freezing point of aviation fuels"
The smoke point means a value measured according to JIS K2537 "Petroleum products- Kerosine and aviation turbine fuels - Determination of smoke point".
The thermal stability means a value measured according to JIS K2276 "Petroleum Products - Determination of thermal oxidation stability of gas turbine fuels - JETOT method Method A, Method B".
The net heat of combustion means a value measured according to JIS K2279 "Crude Oil and petroleum products - Determination of heat of combustion".
The fuel consumption refers to a heating value per unit volume and means a value calculated by multiplying the net heat of combustion by the density.

### (Life Cycle Characteristics)

The life cycle characteristics (life cycle CO₂ calculation) described in the present Example were calculated by the following method.
The life cycle CO₂ was calculated separately as the CO₂ generated accompanied by the flying (combustion of fuels) of an airplane using aviation fuels and as CO₂ generated from crude oil drilling to fuel feeding in the fuel production.
The CO₂ generated accompanied by combustion (hereinafter referred to as "Tank to Wheel CO₂" was converted into the emissions per unit heating value using the value defined by Ministry of the Environment (jet fuel: 2.5 kg - CO₂/L) and used. In addition, the CO₂ generated from drilling to fuel feeding (hereinafter referred to as "Well to Tank CO₂") was calculated as the total CO₂ emissions during the sequence from the drilling of raw materials and crude oil resources through transportation, processing and delivery to pumping to a vehicle's gas tank. In addition, in calculating "Well to Tank CO₂", the calculation was carried out in consideration of the carbon dioxide emissions shown in the following (1B) to (5B). As the data required for the calculation, the oil refinery operation performance data possessed by the present inventors was used.

(1B) Carbon dioxide emissions accompanied by the use of fuel for facilities such as various treatment apparatuses and boilers
(2B) Carbon dioxide emissions accompanied by reforming reaction in a hydrogen producing apparatus, in the treatment using hydrogen
(3B) Carbon dioxide emissions accompanied by catalyst regeneration when the regeneration is carried out through an apparatus involving continuous catalyst regeneration of a catalytic cracking apparatus or the like
(4B) Carbon dioxide emissions when an aviation fuel oil composition was produced or shipped at Yokohama, delivered Yokohama to Sendai, and pumped to a vehicle's gas tank in Sendai
(5B) Carbon dioxide emissions if animal and vegetable oils and fats and components derived from animal and vegetable oils and fats are obtained from Malaysia and the surrounding regions and an aviation fuel oil composition is produced in Yokohama
In addition, if animal and vegetable oils and fats and components derived from animal and vegetable oils and fats are used, in the so-called Kyoto Protocol, a rule is applied in which carbon dioxide emissions resulting from the combustion of these fuels are not calculated as emissions. In this calculation, this rule was applied to "Tank to Wheel CO₂" generated during combustion.

As is clear from Table 5, an aviation fuel oil, which contains an aviation fuel oil base obtained by hydrotreating raw materials derived from animal and vegetable oils and fats, has general properties including fuel consumption equivalent to those of a representative petroleum-based aviation fuel oil, whereas the aviation fuel oil has excellent life cycle characteristics and is a new aviation fuel oil alternative to petroleum which contributes to the prevention of global warming.

**[Table 1]**

| | Catalyst A | Catalyst B |
|---|---|---|
| Content Al₂O₃ (mass%, based on support mass) | 91.2 | 30 |
| Content SiO₂ (mass%, based on support mass) | 4.8 | 70 |
| Content P₂O₅ (mass%, based on support mass) | 4.0 | 0 |
| Content MoO₃ (mass%, based on catalyst mass) | 24.0 | 0 |
| Content NiO (mass%, based on catalyst mass) | 2.6 | 0 |
| Content Pt (mass%, based on catalyst mass) | 0 | 0.5 |
| Pore Volume (ml/g) | 0.75 | 0.47 |
| Average Pore Diameter (nm) | 7.0 | 5.2 |
| Ratio of Pore Volume derived from Pores having a pore diameter of 3 nm or less to Total Pore Volume (% by volume) | 22 | 39 |

**[Table 2]**

| | | Vegetable Oil and Fat 1 (coconut oil) | Vegetable Oil and Fat 2 (palm oil) | Petroleum-based Aviation Fuel oil Base | Hydrocracked Kerosene | Catalytic Cracked Kerosene |
|---|---|---|---|---|---|---|
| Density at 15°C (kg/m³) | | 900 | 916 | 792 | 821 | 830 |
| Kinematic Viscosity at 30°C (mm²/s) | | - | - | 1.4 | 1.6 | 1.1 |
| Elemental Analysis | C (mass%) | 77.0 | 77.3 | 85.4 | 85.8 | 86.2 |
| | H (mass%) | 12.0 | 12.0 | 14.5 | 14.1 | 13.7 |
| Distillation Characteristics | T10 (°C) | - | - | 168.0 | 177.0 | 149.0 |
| | T50(°C) | | - | 197.5 | 209.0 | 184.5 |
| | T90 (°C) | - | - | 244.0 | 246.5 | 227.0 |
| Aromatic Content (% by volume) | | - | - | 17 | 24 | 21 |
| Oxygen Content (% by mass) | | 11.5 | 10.6 | <0.1 | <0.1 | <0.1 |
| Sulfur Content (ppm by mass) | | <1 | <1 | 3 | 2 | 190 |
| Acid Value (mg KOH/g) | | 0.10 | 0.07 | 0.00 | 0.00 | 0.00 |
| Component Ratio (mass%) of Fatty Acid Groups in Oil and Fat (number of carbon atoms in fatty acid carbon chain in Parentheses) | Butyric Acid Group (C3) | 0 | 0 | - | - | - |
| | Caproic Acid Group (C5) | 0 | 0 | - | - | - |
| | Caprylic Acid Group (C7) | 4 | 0 | - | - | - |
| | Capric Acid Group (C9) | 4 | 0 | - | - | - |
| | Lauric Acid Group (C11) | 49 | 0 | - | - | - |
| | Myristic Acid Group (C13) | 17 | 1 | - | - | - |
| | Palmitic Acid Group (C14) | 9 | 44 | - | - | - |
| | Stearic Acid Group (C 16) | 3 | 5 | - | - | - |
| | Oleic Acid Group (C 17) | 7 | 39 | - | - | - |
| | Linoleic Acid Group (C 17) | 2 | 10 | - | - | - |
| | Linolenic Acid Group (C17) | 0 | 0 | - | - | - |

**[Table 3]**

| | | Condition a | Condition b | Condition c |
|---|---|---|---|---|
| Recycled Amount | fold by mass | 1 | - | 1 |
| Reaction Temperature (Average temperature of Catalyst Layer) | °C | 280 | 340 | 360 |
| Hydrogen Pressure | MPa | 6 | 3 | 10 |
| LHSV | h⁻¹ | 1.0 | 1.0 | 0.5 |
| With or Without Quenching | | Yes | - | Yes |
| Addition Amount of Sulfur-Containing Hydrocarbon Compound (to Feedstock) | ppm by mass | 10 | - | 10 |

**[Table 4]**

| | | | Base 1 (Hydrotreated Oil of Vegetable Oils and Fats 1) | Base 2 (Hydrotreated Oil of Vegetable Oils and Fats 2) | Fatty Acid Alkyl Ester of Vegetable Oils and Fats 1 |
|---|---|---|---|---|---|
| Density at 15°C | | kg/m³ | 750 | 780 | 874 |
| Flash Point | | °C | 85 | 75 | 181 |
| distillation Characteristics | T10 | °C | 202.0 | 149.5 | 335.0 |
| | T50 | °C | 225.0 | 168.0 | 354.0 |
| | T90 | °C | 238.0 | 254.0 | 359.0 |
| | EP | °C | 258.0 | 273.5 | - |
| Sulfur Content | | ppm by mass | <1 | <1 | <1 |
| Aromatic Content | | % by volume | 0 | 0 | 0 |
| Total Acid Value | | mg KOH/g | 0.00 | 0.00 | 0.00 |
| Freezing Point °C | | °C | -47 | -40 | 15.0 |

**[Table 5]**

| | | | Ex. 1 | Ex.2 | Ex.3 | Comp. Ex.1 | Comp. Ex.2 | Comp. Ex.3 |
|---|---|---|---|---|---|---|---|---|
| Density at 15°C | | kg/m³ | 774 | 792 | 792 | 861 | 763 | 788 |
| Flash Point | | °C | 71 | 66 | 61 | 93 | 68 | 46 |
| Distillation Characteristics | T10 | °C | 173.5 | 152.0 | 170.0 | 179.5 | 170.5 | 166.5 |
| | T50 | °C | 200.0 | 177.5 | 198.5 | 280.5 | 210.0 | 191.5 |
| | T90 | °C | 228.0 | 245.0 | 230..5 | 340.5 | 231.5 | 231.5 |
| | EP | °C | 255.0 | 270.0 | 251.0 | 355.0 | 250.0 | 251.5 |
| Sulfur Content | | ppm by mass | 58 | 1 | 2 | 55 | 3 | 4 |
| Aromatic Content | | % by volume | 7 | 8 | 11 | 8 | 6 | 17 |
| Net Heat of Combustion | | J/g | 43860 | 43660 | 43570 | 42880 | 43510 | 43400 |
| Total Acid Value | | mg KOH/g | 0.00 | 0.00 | 0.00 | 0.25 | 0.01 | 0.01 |
| Freezing Point | | °C | -49 | -48 | -50 | -12 | -47 | -49 |
| Smoke Point | | mm | 38 | 40 | 32 | 25 | 40 | 25 |
| Thermal Oxidation Stability | Filer Pressure Drop | Kpa | 1 | 1 | 1 | 28 | 1 | 1 |
| | Tube Deposits Rating | | 1b | 1b | 1b | 3 | 1b | 1b |
| Fuel Consumption (Calorific Value per unit volume) | | kJ/L | 33950 | 34580 | 34500 | 36920 | 33200 | 34200 |
| Life Cycle Characteristics (WtW - CO₂ emissions) | | g-CO₂/MJ | 68.0 | 65.2 | 61.0 | 68.8 | 65.0 | 81.3 |

## Claims

1. An aviation fuel oil composition comprising:
a first base which is a fraction having a boiling range of 140 to 280°C obtained through a step of hydrotreating a first raw oil feedstock containing a sulfur-containing hydrocarbon compound and an oxygen-containing hydrocarbon compound derived from an animal or vegetable oil and fat or a second feedstock which is an oil blend of the first feedstock and a petroleum-based base obtained by refining a crude oil; and
a second base which is a fraction having a boiling range of 140 to 280°C obtained from a heavy oil cracking apparatus.

2. The aviation fuel oil composition according to claim 1, wherein the second base has a density at 15°C of 800 kg/m³ or more and 840 kg/m³ or less.

3. The aviation fuel oil composition according to claim 1 or 2, wherein the first base is obtained through the step of hydrotreating the first or second feedstock in the presence of hydrogen under the conditions of a hydrogen pressure of 2 to 13 MPa, a liquid hourly space velocity of 0.1 to 3.0 h⁻¹ and a hydrogen/oil ratio of 150 to 1500 NL/L, and a reaction temperature of 150 to 480°C by using a catalyst prepared by supporting one or more metals selected from elements of groups 6A and 8 of the periodic table on a support formed of a porous inorganic oxide composed of two or more elements selected from aluminum, silicon, zirconium, boron, titanium, and magnesium.

4. The aviation fuel oil composition according to any one of claims 1 to 3, wherein the first base is obtained through a step of further isomerizing a hydrogenated oil obtained through the step of hydrotreating the first or second feedstock in the presence of hydrogen under conditions of a hydrogen pressure of 2 to 13 MPa, a liquid hourly space velocity of 0.1 to 3.0 h⁻¹ and a hydrogen/oil ratio of 250 to 1500 NL/L, and a reaction temperature of 150 to 380°C by using a catalyst prepared by supporting a metal selected from elements of group 8 of the periodic table on a support formed of a porous inorganic oxide composed of a substance selected from aluminum, silicon, zirconium, boron, titanium, magnesium, and zeolite.

5. The aviation fuel oil composition according to any one of claims 1 to 4, further comprising an aviation fuel oil base obtained by refining a crude oil, a synthetic aviation fuel oil base, or a third base which is a mixture thereof.

6. The aviation fuel oil composition according to any one of claims 1 to 5, further comprising one or more additives selected from an antioxidant, an antistatic, a metal deactivator, and an anti-icing agent.

7. The aviation fuel oil composition according to any one of claims 1 to 6, satisfying standard values of JIS K2209 "Aviation Turbine Fuels".
